(19) Europäisches Patentamt
European Patent Office
Office européen des brevets

(11) **EP 3 086 081 A1**

(12) **EUROPÄISCHE PATENTANMELDUNG**

(43) Veröffentlichungstag:
26.10.2016 Patentblatt 2016/43

(51) Int Cl.:
*G01B 7/16* (2006.01)    *G01L 1/16* (2006.01)

(21) Anmeldenummer: **15165126.2**

(22) Anmeldetag: **24.04.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder:
• **pro.micron GmbH & Co.KG**
**87600 Kaufbeuren (DE)**

• **Horst Siedle GmbH & Co. KG.**
**78120 Furtwangen (DE)**

(72) Erfinder:
• **PLESSKY, Viktor, Dr.**
**2025 Chez-le-Bart (CH)**
• **HELBIG, Christian, Dr.**
**86922 Eresing (DE)**

(74) Vertreter: **Raffay & Fleck**
**Patentanwälte**
**Grosse Bleichen 8**
**20354 Hamburg (DE)**

(54) **DEHNUNGSMESSSENSOR**

(57)    Offenbart wird ein Dehnungsmesssensor mit einem nach dem SAW-Prinzip arbeitenden Sensorelement, wobei das Sensorelement einen piezoelektrisch aktiven Kristall und auf einer Sensoroberfläche des Kristalls aufgebrachte Strukturen in Form von elektrischen Kontaktstrukturen sowie Strukturen für die Erzeugung, Beeinflussung und/oder Erfassung von sich entlang einer Ausbreitungsrichtung entlang der Sensoroberfläche ausbreitenden akustischen Oberflächenwellen (SAW) aufweist, wobei der piezoelektrisch aktive Kristall ein Quarzkristall ist.

Dieser Dehnungsmesssensor zeichnet sich erfindungsgemäß dadurch aus, dass die Sensoroberfläche eine durch einen Kristallschnitt entlang einer der nachfolgenden Bedingung genügenden Schnittebene gebildet ist:

$$(-56° \leq \alpha \leq -50°) \mathrm{rotYX},$$

mit $\alpha$: Winkel in °,
wobei die Strukturen zum Erzeugen, Beeinflussen und/oder Erfassen von solchen für die Sensorfunktion zu erfassenden Oberflächenwellen ausgelegt und auf der Sensoroberfläche angeordnet sind, die als Scherwellenmoden (STW) und senkrecht zu der X-Achse des Kristalls sich ausbreitende Oberflächenwellen auftreten.

Es hat sich herausgestellt, dass diesen Bedingungen genügende Dehnungsmesssensoren sich durch eine weitgehend universelle für unterschiedliche Anwendungsfälle greifende Verwendbarkeit auszeichnet und sich über ein weites Temperaturfenster als in ihren Messergebnissen wenig anfällig für Temperaturänderungen erweisen.

EP 3 086 081 A1

Fig. 1

**Beschreibung**

Die Erfindung betrifft einen Dehnungsmesssensor, der ein nach dem SAW-Prinzip arbeitendes Sensorelement enthält.

Als SAW-Prinzip, nach welchem ein Sensorelement eines gattungsgemäßen Dehnungsmesssensors arbeitet, wird ein mit akustischen Oberflächenwellen, kurz auch OFW bzw. SAW (letzteres aus dem Englischen abgeleitet von Surface Acoustic Waves) funktionierendes Sensorelement bezeichnet. Derartige Sensorelemente umfassen typischerweise einen piezoelektrisch aktiven Kristall, auf dem auf einer Sensoroberfläche Strukturen in Form von elektrischen Kontaktstrukturen und Strukturen für die Erzeugung, Beeinflussung und/oder Erfassung von sich entlang der Sensoroberfläche ausbreitenden akustischen Oberflächenwellen aufgebracht sind. Durch elektrische Anregung des Kristalls, die über die elektrischen Kontaktstrukturen auf der Sensoroberfläche erfolgt, entstehen auf der Sensoroberfläche Oberflächenwellen, die sich mit einer Ausbreitungsgeschwindigkeit und einer Frequenz über diese Sensoroberfläche ausbreiten, dabei für die Überwindung bestimmter geometrisch vorgegebener Laufwege, insbesondere Laufwege zwischen auf die Oberfläche aufgebrachten Strukturen, eine Laufzeit benötigen, die von der Ausbreitungsgeschwindigkeit einerseits und von der entlang des Laufweges zurückzulegenden Strecke, also der Geometrie, andererseits abhängt. Für die Ausbildung von Dehnungssensoren mit solchermaßen nach dem SAW-Prinzip arbeitenden Sensorelementen wird der Effekt ausgenutzt, dass die Laufzeit der Oberflächenwellen zwischen Strukturelementen auf der Sensoroberfläche von auf dem Sensorelement lastenden mechanischen Spannungen (Verformungen) abhängig ist, eine Relation zwischen dem Maß entsprechender Spannungen und einer davon abhängigen Veränderung der Laufzeit der Oberflächenwellen hergestellt und damit durch Bestimmung der charakteristischen Laufzeit bzw. charakteristischen Frequenz des Sensorelements auf ein auflastendes Maß an mechanischer Spannung bzw. Verformung geschlossen werden kann. Die Laufzeit wird dabei im Kern durch zwei Faktoren beeinflusst: 1. eine Änderung der Geometrie, also der Weglängen zwischen beteiligten Strukturen auf der Oberfläche, durch aufgrund der mechanischen Spannungen induzierte Verformungen und 2. Änderungen der Materialeigenschaften durch induzierte Spannungen, die eine Änderung der Ausbreitungsgeschwindigkeit der Oberflächenwellen nach sich ziehen.

Dabei wird das Verhältnis zwischen einerseits der relativen Änderung der Laufzeit $\Delta t_{SAW}/t_{SAW}$ der akustischen Oberflächenwellen entlang der Sensoroberfläche und der dort aufgebrachten Strukturen und andererseits der auf das Sensorelement wirkenden Verformung bzw. Dehnung $\varepsilon$ bei Sensorelementen, die durch die Signallaufzeit charakterisiert sind (beispielsweise SAW-Verzögerungsleitungen), als sogenannter K-Faktor angegeben. Alternativ wird der K-Faktor bei Sensorelementen, die sich durch eine charakteristische Frequenz auszeichnen (beispielsweise SAW-Resonatoren), als das Verhältnis zwischen einerseits der relativen Änderung der charakteristischen Frequenz $\Delta f_{SAW}/f_{SAW}$ des Sensorelements und andererseits der Verformung bzw. Dehnung $\varepsilon$ angegeben. Es gilt:

$$\frac{\Delta t_{SAW}}{t_{SAW}} = K_t \bullet \varepsilon$$

bzw.

$$\frac{\Delta f_{SAW}}{f_{SAW}} = K_f \bullet \varepsilon$$

$K_f$ und $K_t$ stehen also für die Empfindlichkeit der Frequenz (f) bzw. der Laufzeit (t) auf die Einwirkung äußerer Dehnung. Es hat sich gezeigt, dass zwischen diesen K-Faktoren aufgrund der inversen Abhängigkeit der physikalischen Größen Laufzeit und Frequenz in guter Näherung folgende Korrelation besteht:

$$K_f = -K_t.$$

Diese Korrelation zwischen Empfindlichkeit der Frequenz und Empfindlichkeit der Laufzeit gilt übrigens nicht nur in Bezug auf Dehnungseinwirkung, sie gilt beispielsweise auch in Bezug auf eine Temperaturänderung. Die Empfindlichkeit der Frequenz $S_f$ bzw. der Laufzeit $S_t$ gegenüber einer Temperaturänderung $\Delta \vartheta$ ist folgendermaßen definiert:

$$\frac{\Delta t_{SAW}}{t_{SAW}} = S_t \cdot \Delta \vartheta$$

bzw.

$$\frac{\Delta f_{SAW}}{f_{SAW}} = S_f \cdot \Delta \vartheta$$

und es gilt in guter Näherung:

$$S_f = -S_t$$

Zu erwähnen ist hier, dass - je nach Material des Sensors - der oben beschriebene S-Faktor selbst ebenso wie auch der K-Faktor eine Temperaturabhängigkeit aufweisen kann.

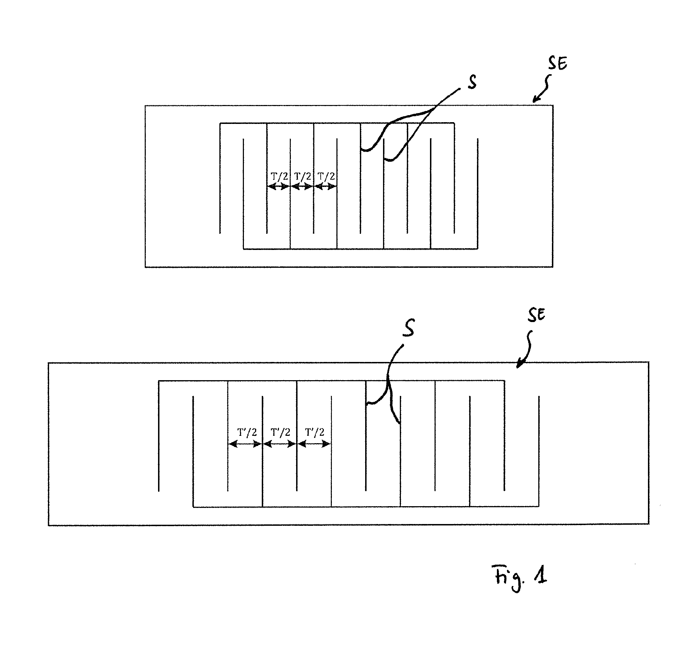

Im Folgenden wird erläutert und exemplarisch dargestellt, wie sich eine auflastende Verformung auf Sensorelemente auswirkt, die sich durch ein charakteristisches Frequenzverhalten auszeichnen. Bei frequenzspezifischen SAW-Sensorelementen wird die generierte Oberflächenwelle mehrfach zwischen typischerweise periodisch angeordneten Strukturelementen reflektiert, so dass sich eine Überlagerung der vielen reflektierten Wellenbeiträge ergibt. Dabei kommt es charakteristischerweise zu Resonanzen bei spezifischen Frequenzen. Die entsprechende Resonanzbedingung ist eine bestimmte Phasenlage der überlagerten Wellenbeiträge, wenn die Laufzeiten t der Oberflächenwelle zwischen den einzelnen Strukturelementen S eines Sensorelements SE in einem bestimmten Verhältnis zur Periode T der Oberflächenwelle $\left(T = \dfrac{1}{f}\right)$ stehen, in der Darstellung der beige-fügten Figur 1 z.B. $t = \dfrac{T}{2}$ bei ungedehntem Kristall, wie in der Fig. 1 oben darge-stellt. Durch Dehnung des Sensorelements SE verformen sich einerseits die Strukturelemente S auf der Oberfläche geometrisch und verändert sich andererseits die Oberflächenwellenausbreitungsgeschwindigkeit, so dass sich als Konsequenz auch die Wellenlaufzeiten zwischen diesen Strukturelementen S verändern, was in der unteren Darstellung der Fig. 1 angedeutet ist, indem dort die Laufzeiten $t' = \dfrac{T'}{2}$ zwischen den Strukturelementen S bezeichnet sind.

Die Auswirkung einer Verformung bzw. Dehnung auf ein frequenzspezifisches SAW-Sensorelement ist daher also zunächst eine relative Laufzeitveränderung zwischen den Strukturelementen von $\dfrac{\Delta t_{SAW}}{t_{SAW}} = K_t \bullet \varepsilon$. Infolgedessen wird die Resonanzbedingung nun von einer um $K_t \cdot \varepsilon$ relativ verschobenen Wellenperiode erfüllt, bzw. von einer um $\dfrac{\Delta f_{SAW}}{f_{SAW}} = K_f \bullet \varepsilon$ verschobenen Frequenz.

Im Hinblick auf den jeweils hinsichtlich der betrachteten Größe bestimmten K-Faktor kann zudem noch einmal unterschieden werden zwischen einem Faktor $K_{längs}$, der den Proportionalitätsfaktor für eine Veränderung einer charakteristischen Laufzeit bzw. Frequenz des Sensorelements bei in Ausbreitungsrichtung der akustischen Oberflächenwellen, d.h. in einer Längsrichtung der Messanordnung, wirkender Dehnung bzw. Verformung angibt, und einem Faktor $K_{quer}$, der den Proportionalitätsfaktor bei entsprechend quer zu dieser Ausbreitungsrichtung und Längsrichtung (genau genommen senkrecht zu dieser Richtung) auftretenden Verformungen bzw. Dehnungen angibt.

Ein weiterer Effekt ergibt sich aus einer Temperaturabhängigkeit der Messergebnisse eines Sensorelements, das stets auch eine Temperatursensitivität aufweisen wird, indem es auf Veränderungen der Temperatur mit anderen Ausgangssignalen reagiert.

Um nun für Dehnungsmessungen zuverlässige Messsensoren zu entwickeln, sind folgende Randbedingungen - möglichst jede für sich genommen - in einem Sensorelement zu optimieren:

- Der K-Faktor, der der Sensitivität des Sensors entspricht, sollte in seinem Betrag möglichst groß sein, um auch bei geringen zu messenden Verformungen bzw. Dehnungen, also kleinem ε, eine merkliche und damit mit gutem Messsignal und guter Messgenauigkeit erfassbare Veränderung der Laufzeit bzw. der Frequenz der akustischen Oberflächenwellen zu erhalten. Dabei ist der Zusammenhang $K_f = -K_t$ dahingehend vorteilhaft zu nutzen, dass ein gemeinsames Optimum bezüglich dieses Kriteriums sowohl für Sensorelemente, die sich durch eine charakteristische Frequenz auszeichnen (beispielsweise SAW-Resonatoren), als auch für Sensorelemente, die durch die Signallaufzeit charakterisiert sind (beispielsweise Verzögerungsleitungen), gefunden werden kann.

- Abhängig davon, welche Art von Messung einer Verformung bzw. Dehnung gewünscht ist, stellen sich andere Anforderungen an die K-Faktoren in Längs- und Querrichtung.

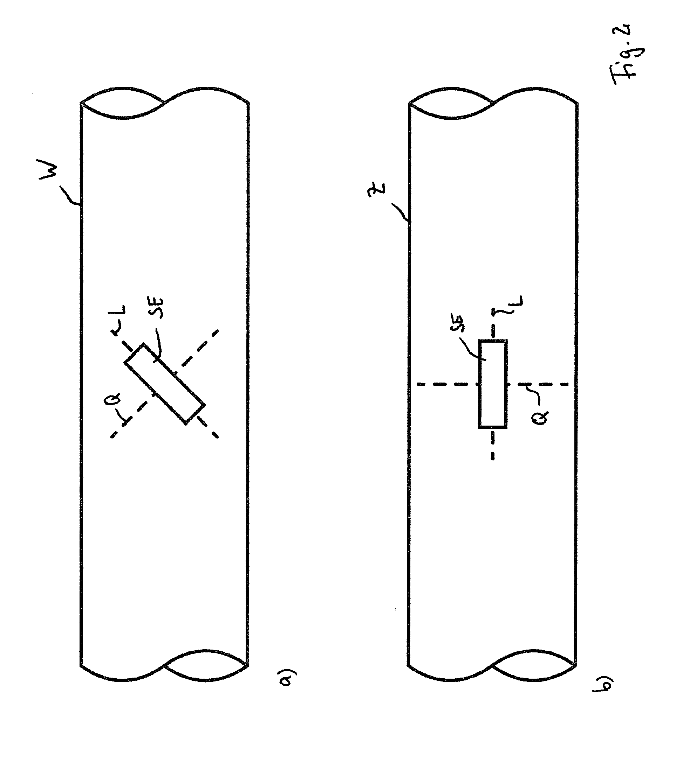

So tritt z.B. bei Torsionsmessungen an dem entsprechend dem Messzweck ausgerichtet angeordneten Sensor eine Längsdehnung (entlang der Längsrichtung des Sensors) und zugleich eine Querdehnung (entlang der Querrichtung des Sensors) auf, wobei die Querdehnung typischerweise den gleichen Betrag, aber das umgekehrte Vorzeichen aufweist wie die Längsdehnung. Eine beispielhafte Anordnung ist in Fig. 2a dargestellt. Dort ist auf einer als Beispiel für ein hinsichtlich einer Torsion zu vermessendes Element eine Welle W dargestellt, auf dem ein Sensorelement SE (ein SAW-Sensor) mit seiner Längsrichtung L quer zu der Achsrichtung der Welle W, insbesondere in einem Winkel von 45° zu dieser Achsrichtung, angeordnet ist. Entsprechend verläuft auch die Querrichtung Q des Sensorelementes SE quer zu der Achsrichtung der Welle W, insbesondere auch in einem Winkel von 45° zu dieser, jedoch mit anderer Drehrichtung verdreht. In einem solchen Fall wird eine hohe Sensorempfindlichkeit erhalten bei K-Faktoren in Längsrichtung und in Querrichtung, $K_{längs}$ und $K_{quer}$, die im Betrag hoch, aber mit unterschiedlichen Vorzeichen belegt sind. Allgemein kann hier aber auch gesagt werden, dass eine Konstellation, bei der die Differenz der beiden K-Faktoren in Längs- und Querrichtung $K_{längs}$ - $K_{quer}$ einen betragsmäßig großen Wert annimmt, eine gute Empfindlichkeit des Sensors ergibt.

Wird der Sensor für die Messung reiner Zugbelastungen ausgelegt und entsprechend ausgerichtet angeordnet, gilt gleiches Kriterium: Die Längsdehnung führt in der Regel zu einer Querkontraktion, also einer Dehnung mit entgegengesetztem Vorzeichen. Eine Längskontraktion führt in der Regel zu einer Querdehnung, also wiederum zu einer Dehnung mit entgegengesetztem Vorzeichen. Eine beispielhafte Anordnung ist in Fig. 2b dargestellt. Dort ist auf einem als Beispiel für ein hinsichtlich einer Zugbelastung zu vermessendes Element ein Zugstab Z dargestellt, auf dem ein Sensorelement SE (ein SAW-Sensor) mit seiner Längsrichtung L parallel zu der Längsrichtung des Zugstabes Z angeordnet ist. Entsprechend verläuft die Querrichtung Q des Sensorelementes SE senkrecht zu der Längsrichtung des Zugstabes Z. Auch hier sind dann also die obigen Überlegungen analog gültig.

Wird hingegen eine in allen Richtungen der zu vermessenden Oberfläche gleichmäßige (isotrope) Kompression oder Dehnung gemessen und der Sensor für eine solche Messung ausgelegt, so sind andere Randbedingungen zu beachten. Denn eine solche gleichmäßige Kompression führt neben der Längskontraktion auch zu einer Querkontraktion mit gleichem Vorzeichen. Hier ist dann also ein hoher Betragswert der Summe der beiden Faktoren $K_{längs}$ und $K_{quer}$ sinnvoll, da sich über eine solche Ausgestaltung eine betragsmäßig große Spanne und damit Empfindlichkeit des Sensors ergibt. Analoges gilt für die isotrope Dehnung.

- Die Temperatursensitivität des Sensorelements, also ein Ansprechen des Sensorelements auf Temperaturveränderungen, sollte in einem Temperaturbereich, in welchem das Sensorelement eingesetzt wird, möglichst gering sein. Entsprechend ist ein Sensorelement mit einem geringen S-Faktor in dem für seinen Einsatz relevanten Temperaturbereich erstrebenswert. Aufgrund des bereits angeführten Zusammenhanges zwischen $S_f$ und $S_t$, die in guter Näherung mit umgekehrten Vorzeichen betragsmäßig gleich sind, ist so eine Optimierung gleichzeitig sowohl für Sensorelemente, die sich durch eine charakteristische Frequenz auszeichnen (beispielsweise SAW-Resonatoren), als auch für Sensorelemente, die durch die Signallaufzeit charakterisiert sind (beispielsweise Verzögerungsleitungen), möglich. Insbesondere sollte ein Ansprechen des Sensorelements auf Dehnungen, also die Sensitivität gegenüber dieser Zielgröße, deutlich stärker ausgeprägt sein als ein Ansprechen auf Temperaturschwankungen, also die Sensitivität gegenüber dieser Größe. Ähnliches gilt in Bezug auf andere nicht der Zielgröße (Dehnung) zuzurechnende äußere Einflüsse, wie etwa Quereffekte anderer mechanischer Belastungen oder Einwirkungen anderer Störgrößen.

- Das Material des piezoelektrisch aktiven Kristalls sollte ein einfach zu erhaltendes und günstiges Material sein, um die Sensorelemente insgesamt kostengünstig erhalten bzw. herstellen zu können. Zugleich muss aber auch sichergestellt sein, dass das Material des piezoelektrisch aktiven Kristalls (das Substrat für das Sensorelement) möglichst gut für die Ausbildung von qualitativ hochwertigen SAW-Bauteilen geeignet ist. Dies gilt insbesondere im Hinblick auf bevorzugte Ausbreitungsrichtungen, Laufzeitdämpfungen, Streueffekte der Oberflächenwellen und eine Neigung zur Anregung parasitärer, sogenannter Bulk-Wellen, also solcher akustischer Wellen, die nicht entlang der Oberfläche propagieren, sondern sich in die Tiefe des Materials fortsetzen. Dabei ist insbesondere auch die Art der zu betrachtenden Oberflächenwelle, d.h. der zu betrachtenden und zu verwendenden Mode, mit zu berücksichtigen. So verhalten sich die Substratmaterialien, d.h. das jeweilige Material des piezoelektrischen Kristalls, in einem konkreten in Bezug auf die Kristallachsen vorgenommenen Oberflächenschnitt unterschiedlich für die jeweiligen Moden. Betrachtet werden hier die sog. Rayleigh- und die Scherwellen- (STW-) Moden.

Unter diesen oben genannten Prämissen ein für die Dehnungsmessung optimal geeignetes Sensorelement ausfindig zu machen, insbesondere im Hinblick auf das Material und eine kristalline Orientierung des piezoelektrisch aktiven Kristalls, aber auch im Hinblick auf die nach Laufrichtung und Wellentyp auszuwählende, für die Sensorfunktion aufzuprägende Oberflächenwelle ist Aufgabe der vorliegenden Erfindung. Dabei soll insbesondere ein weitgehend universell für die oben skizzierten unterschiedlichen Anwendungsfälle verwendbarer Dehnungsmesssensor gefunden werden.

Diese Aufgabe wird gelöst durch einen Dehnungsmesssensor mit einem nach dem SAW-Prinzip arbeitenden Sensorelement gemäß den Merkmalen des Patentanspruches 1. Vorteilhafte Weiterbildungen eines solchen Dehnungsmesssensors sind in den Ansprüchen 2 und 3 angegeben.

Für die Suche nach einem optimal verwendbaren piezoelektrisch aktiven Kristall als Basis für das Sensorelement haben die Erfinder zunächst Quarz als ein solches Material ausgewählt. Quarz ist ein piezoelektrischer Kristall, der allgemein gut erhältlich ist, vergleichsweise kostengünstig zur Verfügung steht und hochwertige physikalische Eigenschaften für ein Basismaterial für Oberflächenwellenbauteile aufweist. Dies liegt nicht nur an dem in großen Mengen verfügbaren Grundmaterial für Quarz, Siliziumoxid, sondern auch darin, dass für die Herstellung kristallinen Quarzes eine seit vielen Jahren ausgereifte Technologie zur Verfügung steht, da piezoelektrische Quarzkristalle schon seit sehr langer Zeit Verwendung finden, z.B. als Schwingquarze in Zeitmessinstrumenten.

Die Erfinder haben sodann erkannt, dass die Eigenschaften im Hinblick auf die Größe des K-Faktors, auf das Größenverhältnis zwischen $K_{längs}$ und $K_{quer}$ sowie im Hinblick auf die Temperaturabhängigkeit des K-Faktors für die jeweiligen Moden der Oberflächenwellen sehr stark abhängig sind von einer Schnittebene, entlang derer die Sensoroberfläche des Kristalls aus diesem herausgeschnitten ist. Die Erfinder haben mit Ausgangsmaterialien ganz unterschiedlicher Schnittebenen, die sie in gleicher Weise mit einer typischen Strukturierung mit elektrischen Kontaktstrukturen sowie Strukturen für die Erzeugung, Beeinflussung und/oder Erfassung von sich entlang einer Ausbreitungsrichtung über die Sensoroberfläche ausbreitenden akustischen Oberflächenwellen der genutzten Mode jeweils in gleicher Anordnung und Größe versehen haben, Versuche durchgeführt, die der Ermittlung der Dehnungssensitivitäten $K_{längs}$ und $K_{quer}$ abhängig von einer eingeleiteten mechanischen Dehnung dienten. Dabei wurde bei den Versuchen darauf geachtet, dass jeweils immer eine reproduzierbar gleiche Versuchsanordnung gewählt wurde. Dies betraf insbesondere auch die mechanische Befestigung und die Kontaktierung der SAW-Sensorelemente. Denn insbesondere die Art der mechanischen Verbindung der SAW-Sensorelemente an den Versuchskörpern, auf die die Dehnungskräfte aufgebracht wurden, kann, wenn sie für die jeweiligen Versuche unterschiedlich ausfällt, zu unterschiedlichen Dehnungssensitivitäten der SAW-Sensoren führen, was, wenn man diesem Umstand nicht durch eine reproduzierte Versuchsanordnung Rechnung trägt, zu Verfälschungen der Ergebnisse führt. Bei diesen Versuchen wurden anhand von Messreihen die oben erläuterten, die Dehnungssensitivität bestimmenden K-Faktoren ($Kt$ bzw. $K_f$) bei einer festgelegten ersten Messtemperatur, nämlich bei Raumtemperatur, bestimmt. In den Versuchen wurden die K-Faktoren $K_f$ aus Versuchssensorelementen ermittelt, die ein charakteristisches Frequenzverhalten besitzen, die Faktoren $Kt$ wurden gemäß $Kt = -K_f$ bestimmt. Darüber hinaus wurde die Temperatursensitivität der so gebildeten Vergleichssensoren in einem Intervall von Raumtemperatur bis zu einer hohen möglichen Anwendungstemperatur von 100°C ermittelt. Bei der Ermittlung der Temperaturabhängigkeit wurden zwei Arten der Auswertung zugrunde gelegt. Bei einer ersten Betrachtungsweise wurde eine Größenangabe für die Temperaturempfindlichkeit des betrachteten Sensors bestimmt als der Betrag der Differenz zwischen dem größten und dem kleinsten beobachteten Wert der Frequenzverschiebung $\dfrac{\Delta f_{SAW}}{f_{SAW}}$ im untersuchten Intervall. Bei der zweiten Methode wurde die größte Steigung einer über die Temperatur aufgenommenen Kurve der von der Temperatur abhängigen Frequenzverschiebung $\dfrac{\Delta f_{SAW}}{f_{SAW}}$ als Kriterium für die Temperatursensitivität herangezogen und die Größe der Temperatursensitivität mit dieser größten Steigung gleichgesetzt. Dabei zeigte sich für die durchgeführten Versuche, dass beide Auswertungsmethoden zu jedenfalls qualitativ gleichen Ergebnissen führten.

Diese Versuchsreihen mit verschiedenen Substratschnitten wurden dabei auch für verschiedene Substratmaterialien durchgeführt, wobei neben Quarz auch Lithiumniobat ($LiNbO_3$) und Lithiumtantalat ($LiTaO_3$) mit einbezogen wurden. Darüber hinaus wurden unterschiedliche SAW-Moden, (Rayleigh-Moden und Schermoden, sog. STW (Shear Transverse Waves), sowie unterschiedliche Ausbreitungsrichtungen der Oberflächenwellen auf der Sensoroberfläche betrachtet. Die Ergebnisse dieser Versuche wurden dann hinsichtlich der oben bezeichneten Kriterien für ein optimales Sensorelement ausgewertet.

Dabei ergab es sich zum einen, dass Quarz aufgrund des in den Versuchen beobachteten Umstandes, dass dieses Material im Vergleich zu anderen untersuchten Materialien geringe Temperatursensitivität hat, als Material für das Substrat zu bevorzugen ist. Weiterhin wurde gefunden, dass aus einer Vielzahl unterschiedlichster Schnittebenen, entlang derer die jeweils untersuchten Sensoroberflächen gebildet waren, sich für die betrachteten Moden der Oberflächenwellen ein besonderer Bereich, und dieser für die Scherwellenmoden als besonders geeignet erwiesen hat, in dem die Dehnungssensitivität besonders hoch war.

Diese besonders gut geeignete Gruppe möglicher Schnittebenen, die sich für solche Sensorelemente als geeignet erwiesen hat, bei denen Strukturen zur Anregung und Auswertung von für die Sensorfunktion zu erfassenden Oberflächenwellen als Scherwellenmoden (STW) und senkrecht zu der X-Achse des Kristalls sich ausbreitender Oberflächenwellen ausgelegt und auf der Sensoroberfläche angeordnet sind, ist diejenige, für die gilt:
($-56° \leq \alpha \leq -50°$)rotYX, mit $\alpha$: Winkel in °.

In einer Notation gemäß der Eulerschen Winkel lässt sich diese Bedingung auch schreiben als [0°, $\alpha \pm 90°$], mit der Bedingung ($-56$)° $\leq \alpha \leq -50°$.

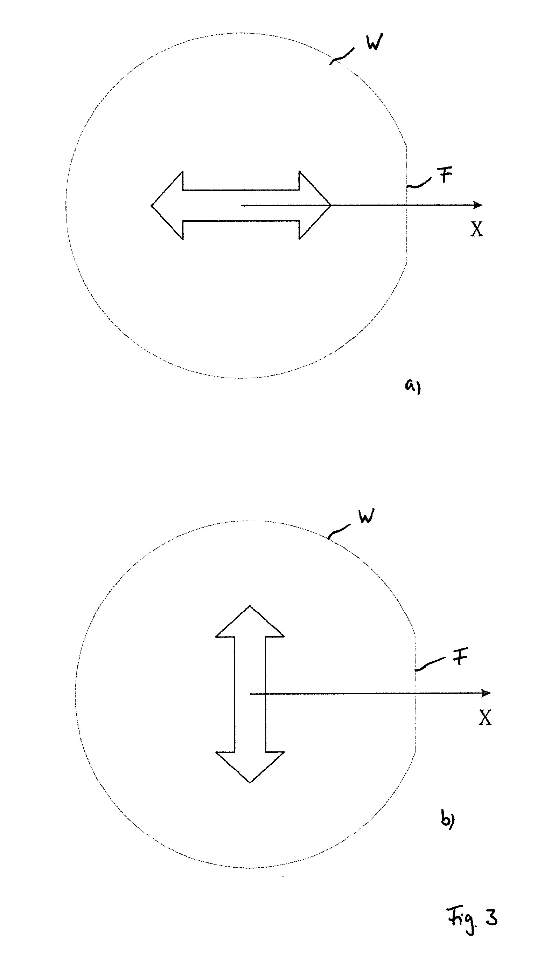

Schematisch ist eine wie für die Erfindung geforderte Ausbreitung der SAW-Welle bzw. ihrer Scherwellenmode senkrecht zu der X-Richtung des Kristalls bezogen auf einen Wafer W eines Quarzkristalls in Fig. 3b aufgezeigt. Der dort auf die von oben dargestellte Kristallscheibe gelegte Doppelpfeil gibt die Ausbreitungsrichtung an, die hier, wie gesagt, senkrecht zu der ebenfalls eingezeichneten X-Richtung verläuft. Die X-Richtung liegt entsprechend der Konvention wiederum senkrecht zu dem Flat F des Wafers W.

Zum Vergleich ist in Fig. 3a schematisch eine solche Ausbreitung entlang der X-Richtung des Kristalls bezogen auf einen Wafer W eines Quarzkristalls aufgezeigt, bei der sich die Oberflächenwellen als Rayleigh Moden und entlang der X-Achse des Kristalls ausbreiten. Der dort auf die von oben dargestellte Kristallscheibe gelegte Doppelpfeil gibt die Ausbreitungsrichtung an, die hier, wie gesagt, parallel zu der ebenfalls eingezeichneten X-Richtung verläuft. Die X-Richtung liegt entsprechend der Konvention senkrecht zu dem Flat F des Wafers W. Eine solche Modenwahl ist für den erfindungsgemäß gewählten Kristall mit der Oberflächenorientierung entlang der oben genannten Schnittebene nicht geeignet.

Die Benennung der Schnittebenen erfolgt dabei nach einer allgemein anerkannten Notation, die auf die Orientierungsachsen im Kristallgitter Bezug nimmt. Dabei ist mit z.B. 36°rotYX ein - für bekannte nach dem SAW-Prinzip arbeitende Dehnungsmesssensoren häufig gewählter - um 36° rotierter YX-Schnitt gemeint. Als ein YX-Schnitt wird ein solcher bezeichnet, bei dem die kristallographische X-Achse parallel zur geschnittenen Kristalloberfläche liegt und die Y-Achse des Kristalls senkrecht zu der geschnittenen Oberfläche steht. Hierbei sind die konventionellen rechtwinkligen Achsen des Kristallsystems gemeint. Wie diese für den einzelnen Kristall zu ermitteln sind, z.B. für Quarz, (alpha-Quarz), weiß der Fachmann. Informationen dazu lassen sich z.B. finden in der Veröffentlichung *Publication and Proposed Revision of ANSI/IEEE Standard 176-1987 "ANSI/IEEE Standard on Piezoelectricity"*, in IEEE Transactions on Ultrasonics, Ferroelectrics, and Frequency Control, Vol. 43, No. 5 September 1996. Dort finden sich in Abschnitt 3.2.5. folgende eingehende Angaben zu der entsprechenden Notation und Bestimmung der Achsen.

Die beschriebenen Ausrichtungen stehen selbstverständlich auch stellvertretend für alle symmetrieäquivalenten Ausrichtungen, die in der Kristallsymmetrie des Kristalls enthalten sind.

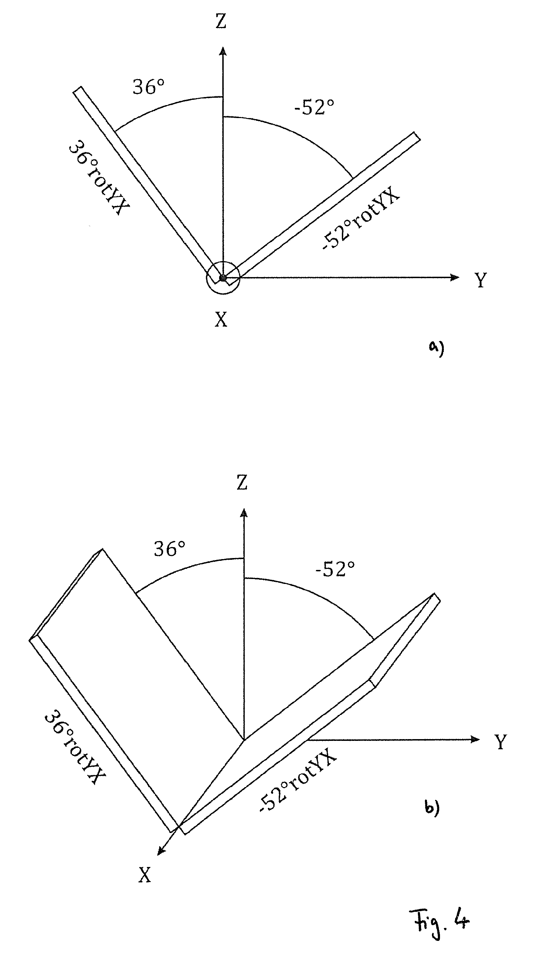

Damit ist dann ein Kristallschnitt (-52)°rotYX entsprechend entlang einer durch Rotation um die X-Achse um den angegebenen Winkel 52° im mathematisch negativen Sinne (im Uhrzeigersinn) gewonnenen Schnittebene entstanden. Dies ist noch einmal in den Figuren 4a und 4b veranschaulicht, die die Lagen entsprechender Ebenen in Bezug auf das konventionelle rechtwinklige Koordinatensystem des Kristalls in zwei unterschiedlichen Ansichten zeigen. Die X-Achse des Kristalls wird bei am Markt erhältlichen Kristallscheiben (Wafern) durch eine Abflachung der ansonsten kreisförmigen Außenkontur angezeigt, das sogenannte "Flat". Die X-Achse des Kristalls verläuft dabei senkrecht zu der Linie des Flats.

Im Gegensatz zu allen anderen untersuchten Schnittebenen ergab sich bei den aus der erfindungsgemäßen Spanne ausgewählten Schnittebenen, dass sowohl die die Dehnungssensitivität bestimmenden K-Faktoren eine für die praktisch angestrebte Messempfindlichkeit ausreichende Größe aufwiesen (gemessen wurden K-Faktoren mit Beträgen in einer Größenordnung um etwa 0,7) als auch eine ausreichende Differenzierung zwischen $K_{längs}$ und $K_{quer}$ gegeben war ($K_{längs}$ lag betragsmäßig bei etwa 0,7, $K_{quer}$ zwischen 0,002 und 0,04) und dass die Temperatursensitivität gering war, insbesondere die Temperaturabhängigkeiten der Frequenz, mit der sich die akustischen Oberflächenwellen entlang der Sensoroberfläche ausbreiten, sich bei im Betrag vergleichsweise niedrigen Werten befanden mit Werten um etwa 300 ppm für die maximale Frequenzverschiebung im untersuchten Intervall (erstes Verfahren) bzw. Werten von etwa 4 ppm/K für die maximale Frequenzverschiebung pro Temperaturänderung (zweites Verfahren). Die Temperatursensitivität wurde dabei in einem Temperaturintervall von Raumtemperatur bis 100 °C und nach den beiden oben bereits beschriebenen Verfahren bestimmt. Wegen der oben bereits aufgezeigten Relation $K_f = -K_t$ ist das hier gefundene Ergebnis auch auf relative Änderungen der Ausbreitungsgeschwindigkeit anwendbar, so dass die Ergebnisse gleichzeitig sowohl für Sensorelemente, die sich durch eine charakteristische Frequenz auszeichnen (beispielsweise SAW-Resonatoren), als auch für Sensorelemente, die durch die Signallaufzeit charakterisiert sind (beispielsweise Verzögerungsleitungen), gelten.

Gefunden wurde dabei insbesondere auch, dass die auf Quarzsubstraten auf deren entlang der erfindungsgemäß gewählten Schnittebene aufgebrachten Sensoren noch einmal bessere Werte in Bezug auf die K-Faktoren einerseits wie auch in Bezug auf die Temperaturempfindlichkeit andererseits aufwiesen als die an sich bekannten und für Dehnungsmesssensoren häufig gewählten Schnittebenen 34°rotYX und 36°rotYX. Bei auf Quarzoberflächen nach diesen Schnitten hergestellten Vergleichssensoren, die mit sich in X-Richtung ausbreitenden Oberflächenwellen in Rayleigh-Moden arbeiteten, konnten nur K-Faktoren im Bereich von 0,5 bis 0,6 ermittelt werden mit $K_{quer}$-Werten bis zu 0,05. Auch die Temperaturempfindlichkeit war größer mit Werten für die maximale Frequenzverschiebung im untersuchten Intervall (erstes Verfahren) von bis zu 430 ppm bzw. Werten von dem Betrag nach zwischen 6 und 8 ppm/K für die maximale Frequenzverschiebung pro Temperaturänderung (zweites Verfahren).

Aufgrund der für die als besonders geeignet gefundenen Kristalle (Quarz mit den genannten Schnittebenen als SAW-Oberfläche) gefundenen Größenverhältnisse für die K-Faktoren $K_{längs}$ und $K_{quer}$, bei denen die Werte für $K_{quer}$ signifikant (in den Messungen jeweils wenigstens um eine Größenordnung) kleiner sind als für $K_{längs}$, kann der Einfluss von Querverformungen weitgehend vernachlässigt werden, so dass auf diesen Kristallen gebildete Dehnungsmesssensoren für die eingangs skizzierten Anwendungsfälle jeweils gleichermaßen geeignet sind.

Somit haben sich diese Schnittebenen für Quarzkristalle und entlang dieser Schnittebenen ausgebildeten Sensoroberflächen in Bezug auf die jeweils betrachteten Moden der Oberflächenwellen als besonders geeignet im Vergleich zu allen anderen untersuchten Schnittebenen ergeben. Als insbesondere geeignet hat sich dabei folgende Schnittebene herausgestellt:

Für Sensorelemente, bei denen die Strukturen zur Anregung und Auswertung von für die Sensorfunktion zu erfassenden Oberflächenwellen als Scherwellenmoden (STW) und senkrecht zu der X-Achse des Kristalls sich ausbreitender Oberflächenwellen ausgelegt und auf der Sensoroberfläche angeordnet sind:

• -52° rotYX.

Die erfindungsgemäß gebildeten Dehnungsmesssensoren haben sich als besonders geeignet für einen Einsatz bei Temperaturen (Sensortemperaturen) in einem Bereich von -40°C bis + 150°C erwiesen.

Aus den voranstehenden Darlegungen ergeben sich die wesentlichen Vorteile eines erfindungsgemäß gebildeten Dehnungsmesssensors, die insbesondere auch in der im Vergleich zu bekannten Sensoren mit aus anderem Material und/oder entlang anderer Oberflächenschnitte gebildeten piezoelektrischen Grundkörpern deutlich verringerten Temperatursensitivität und somit deutlich reduzierten, durch die Temperatursensitivität hervorgebrachten Messwertverfälschungen für Dehnungsmessungen bei unterschiedlichen Temperaturen liegen. Auf diese Weise können, je nach Anwendungsfall, heute übliche Kompensationsmaßnahmen, sei dies z.B. in Form einer Berücksichtigung der Temperaturabhängigkeit der Messwerte in der Signalauswertung, z.B. durch Aufnehmen der tatsächlichen Temperatur des Dehnungsmesssensor oder seiner Umgebung und Einrechnen eines zuvor bestimmten, von der erfassten Temperatur abhängigen Korrekturfaktors oder durch Differenzbildung von Ausgangssignalen zweier spezifisch ausgerichteter Sensoren, sei dies z.B. auch durch besondere konstruktive und/oder verschaltungstechnische Maßnahmen in der SAW-Struktur selbst, entfallen oder zumindest deutlich im Aufwand reduziert werden. Wird die Kompensation wie im Stand der Technik gegeben für einen erfindungsgemäß gebildeten Dehnungsmesssensor beibehalten, so ergeben sich dann deutlich genauere und zuverlässigere, also qualitativ bessere Messergebnisse.

**Patentansprüche**

1. Dehnungsmesssensor mit einem nach dem SAW-Prinzip arbeitenden Sensorelement, wobei das Sensorelement einen piezoelektrisch aktiven Kristall und auf einer Sensoroberfläche des Kristalls aufgebrachte Strukturen in Form von elektrischen Kontaktstrukturen sowie Strukturen für die Erzeugung, Beeinflussung und/oder Erfassung von sich entlang einer Ausbreitungsrichtung entlang der Sensoroberfläche ausbreitenden akustischen Oberflächenwellen (SAW) aufweist, wobei der piezoelektrisch aktive Kristall ein Quarzkristall ist, **dadurch gekennzeichnet, dass** die Sensoroberfläche eine durch einen Kristallschnitt entlang einer der nachfolgenden Bedingung genügenden Schnittebene gebildet ist: $(-56° \leq \alpha \leq -50°)$rotYX,

mit $\alpha$: Winkel in °,
wobei die Strukturen zum Erzeugen, Beeinflussen und/oder Erfassen von solchen für die Sensorfunktion zu erfassenden Oberflächenwellen ausgelegt und auf der Sensoroberfläche angeordnet sind, die als Scherwellenmoden (STW) und senkrecht zu der X-Achse des Kristalls sich ausbreitende Oberflächenwellen auftreten.

2. Dehnungsmesssensor nach Anspruch 1, **dadurch gekennzeichnet, dass** die Sensoroberfläche durch einen Kristallschnitt entlang der ne -52°rotYX gebildet ist.

3. Dehnungsmesssensor nach einem der vorhergehenden Ansprüche, **dadurch gekennzeichnet, dass** er für einen Einsatz in einem Temperaturbereich von -40°C bis + 150°C ausgelegt ist.

Fig. 1

a)

b)

Fig. 2

EP 3 086 081 A1

a)

b)

Fig. 3

Fig. 4

**Europäisches Patentamt**
**European Patent Office**
**Office européen des brevets**

## EUROPÄISCHER RECHERCHENBERICHT

**Nummer der Anmeldung**

EP 15 16 5126

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 407 479 B1 (MOELLENDORF MANFRED [DE] ET AL) 18. Juni 2002 (2002-06-18) * Zusammenfassung; Abbildungen 1-2 * * Spalte 3, Zeilen 44-67 * * Spalte 4, Zeilen 55-59 * * Spalte 2, Zeilen 56-58 * ----- | 1-3 | INV. G01B7/16 G01L1/16 |
| Y | US 2007/028692 A1 (LIU JAMES Z [US]) 8. Februar 2007 (2007-02-08) * Zusammenfassung; Abbildungen 7-8 * * Absätze [0037] - [0038], [0045] * ----- | 1-3 | |
| Y | Jeffrey P Tate ET AL: "Properties of Passive Components - 3.1.3 Crystal Resonators" In: "The Electronics handbook, Second Edition", 1. Januar 2005 (2005-01-01), CRC Press 2005, XP055219884, ISBN: 978-0-8493-1889-4 Seiten 241-245, * Seite 245 * ----- | 1-3 | |
| Y | Sofrosune: "Quartz crystal device", , 28. Januar 2015 (2015-01-28), XP055219863, Gefunden im Internet: URL:http://www.qiaj.jp/pages/frame20/page01-e.html [gefunden am 2015-10-09] * Seiten 1-2; Abbildung Cutting orientation * ----- | 1-3 | **RECHERCHIERTE SACHGEBIETE (IPC)** G01B G01L G01N H01L |

Der vorliegende Recherchenbericht wurde für alle Patentansprüche erstellt

| Recherchenort | Abschlußdatum der Recherche | Prüfer |
|---|---|---|
| München | 13. Oktober 2015 | Marani, Roberta |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 16 5126

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-10-2015

| Im Recherchenbericht angeführtes Patentdokument | Datum der Veröffentlichung | Mitglied(er) der Patentfamilie | Datum der Veröffentlichung |
|---|---|---|---|
| US 6407479 B1 | 18-06-2002 | DE 19850802 A1<br>EP 1127272 A1<br>JP 2003503675 A<br>US 6407479 B1<br>WO 0026660 A1 | 11-05-2000<br>29-08-2001<br>28-01-2003<br>18-06-2002<br>11-05-2000 |
| US 2007028692 A1 | 08-02-2007 | CN 101283246 A<br>EP 1910790 A1<br>KR 20080041224 A<br>US 2007028692 A1<br>WO 2007019129 A1 | 08-10-2008<br>16-04-2008<br>09-05-2008<br>08-02-2007<br>15-02-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- ANSI/IEEE Standard on Piezoelectricity. *IEEE Transactions on Ultrasonics, Ferroelectrics, and Frequency Control,* September 1996, vol. 43 (5